# EUROPEAN PATENT APPLICATION

(11) **EP 4 494 896 A1**
(43) Date of publication of application: **22.01.2025**
(21) Application number: 24188113.5
(22) Date of filing: 11.07.2024
(51) Int. Cl.: B60B 27/00, B60B 27/02, B60B 27/04, F16D 41/12

(54) **BICYCLE HUB ASSEMBLY WITH AXIAL ENGAGEMENT**

(30) Priority: 18.07.2023 TW 112207495 U
(71) Applicant: Lee Chi Enterprises Co., Ltd., Changhua City, Changhua County (TW)
(72) Inventor: WU, Shan-Lin, Changhua City (TW)
(74) Representative: Melchior, Robin

(57) **Abstract**

A bicycle hub assembly with axial engagement has a hub shell (10), a cassette body (20) and multiple pawl sets (30, 30A, 30B, 30C). The hub shell (10) has an axial teeth portion (121) disposed inside a receiving groove (11). The cassette body (20) rotatably mounted with the hub shell (10) has a mounting portion (21) extending into the receiving groove (11). At least one pawl (31A, 31B, 31C) of each pawl set (30, 30A, 30B, 30C) is axially-swingably mounted with the mounting portion (21) and configured to protrude from a front end surface (211) of the mounting portion (21) and be unidirectionally engaged with the axial teeth portion (121). When the cassette body (20) rotates relative to the hub shell (10), the pawl sets (30, 30A, 30B, 30C) are unidirectionally engaged with the axial teeth portion (121) by turns.

## Description

### BACKGROUND

### 1. Field of the Invention

The present invention relates to components of a bicycle wheel assembly, and more particular to a bicycle hub assembly with axial engagement.

### 2. Description of Related Art

A conventional hub assembly has a hub shell, a cassette body, and a ratchet mechanism. The hub shell is a hub for mounting spokes. The cassette body is rotatably mounted to the hub shell and is used for mounting cassettes. The ratchet mechanism is disposed between the hub shell and the cassette body to restrict the cassette body to rotate relative to the hub shell in a single direction. (That is, the cassette body can only rotate relative to the hub shell in one direction. In a reverse direction, the cassette body and the hub shell are engaged.) Therefore, unidirectional mechanical power transmission from cranksets to a rear wheel through the conventional hub assembly can be achieved.

However, the ratchet mechanism of the conventional hub assembly adopts simultaneous engagement, which leads to long voids in rotations of the cassette body. Therefore, a rider must keep pedaling to rotate the cassette body into a next engaging position, or the cassette body may rotate reversely back to a previous engaging position, which is a waste of power. Increasing teeth number of the ratchet mechanism may shorten voids, but also increases costs of materials and manufacture and weakens structural strength of the ratchet mechanism.

### SUMMARY OF THE INVENTION

The main objective of the present invention is to provide a bicycle hub assembly with axial engagement to effectively shorten voids of transmission and improve torque utilization efficiency.

A bicycle hub assembly with axial engagement in accordance with the present invention comprises a hub shell, a cassette body and at least two pawl sets. The hub shell comprises a receiving groove and an axial teeth portion disposed inside the receiving groove. The cassette body is rotatably mounted with the hub shell and comprises a mounting portion being circular and having a front end surface which is configured to extend into the receiving groove. Each one of the pawl sets comprises at least one pawl swingably mounted with the mounting portion of the cassette body and configured to protrude from the front end surface of the mounting portion and be unidirectionally engaged with the axial teeth portion through axial swinging. When the cassette body rotates relative to the hub shell, the at least two pawl sets are unidirectionally engaged with the axial teeth portion by turns.

Another bicycle hub assembly with axial engagement in accordance with the present invention comprises a hub shell, a cassette body and multiple pawls. The hub shell comprises a receiving groove and an axial teeth portion disposed inside the receiving groove. The cassette body is rotatably mounted with the hub shell and comprises a mounting portion being circular and having a front end surface which is configured to extend into the receiving groove. The multiple pawls are disposed on the mounting portion of the cassette body at spaced intervals, and said pawl is configured to protrude from the front end surface of the mounting portion and be unidirectionally engaged with the axial teeth portion through axial swinging.

Other objectives, advantages and novel features of the invention will become more apparent from the following detailed description when taken in conjunction with the accompanying drawings.

### BRIEF DESCRIPTION OF THE DRAWINGS

Fig. 1 is a perspective view of a bicycle hub assembly with axial engagement of a first embodiment in accordance with the present invention;
Fig. 2 is an exploded view of the bicycle hub assembly in Fig. 1;
Fig. 3 is an enlarged cross-sectional view of the bicycle hub assembly in Fig. 1;
Fig. 4 is an exploded view of a cassette body and pawl sets of the bicycle hub assembly in Fig. 1;
Fig. 5 is a side view of the cassette body and the pawl sets in Fig. 4;
Fig. 6 is an end view of the cassette body and the pawl sets in Fig. 4; and
Fig. 7 is an end view of a cassette body and pawl sets of a bicycle hub assembly with axial engagement of a second embodiment in accordance with the present invention.

### DETAILED DESCRIPTION OF THE INVENTION

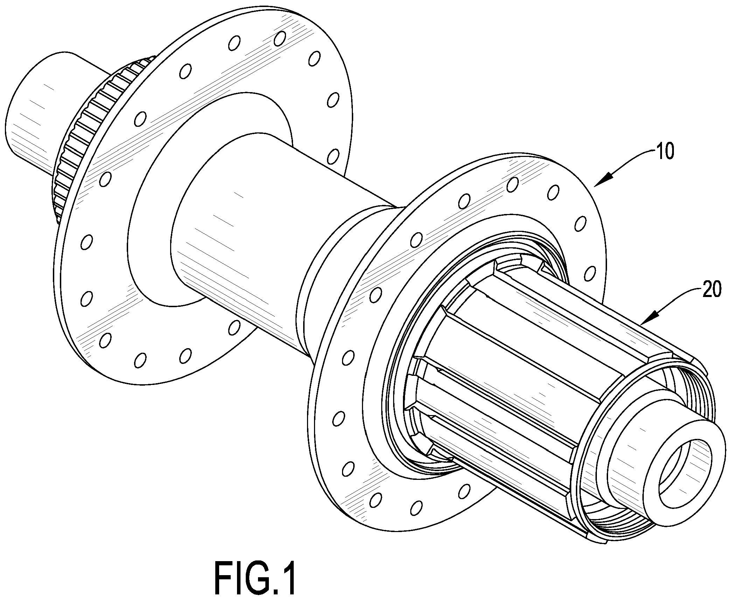

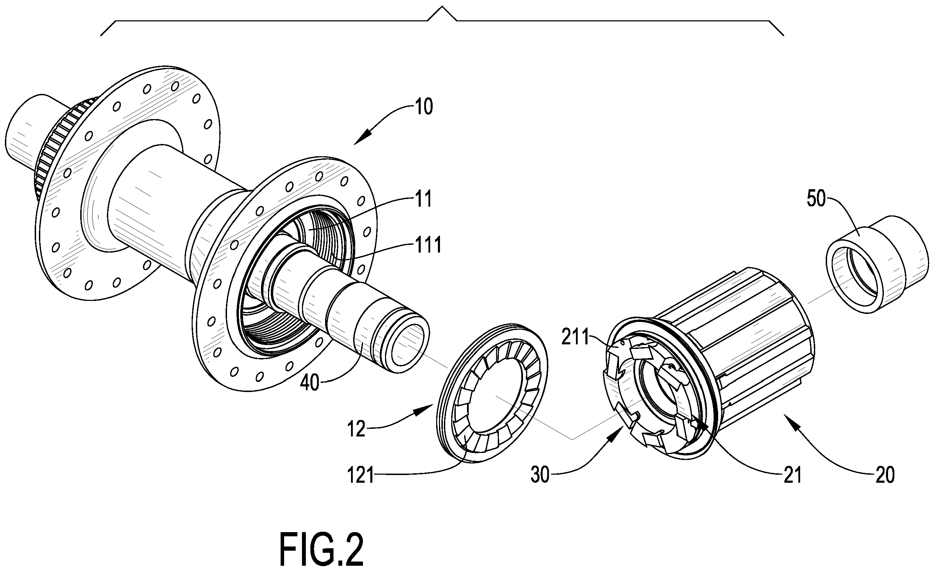

With reference to Figs. 1 to 3, 6 and 7, a first embodiment of a bicycle hub assembly in accordance with the present invention comprises a hub shell 10, a cassette body 20, and at least two pawl sets 30. With further reference to Fig. 2, the hub shell 10 comprises an axial teeth portion 121 having multiple tooth blocks. The cassette body 20 is rotatably mounted with the hub shell 10, and when the cassette body 20 rotates relative to the hub shell 10, the at least two pawl sets 30 are unidirectionally engaged with the axial teeth portion 121 by turns. That is, the cassette body 20 is restricted by said pawl sets 30 and is only able to rotate relative to the hub shell 10 in a single direction, e.g. rotatable clockwise but not counterclockwise.

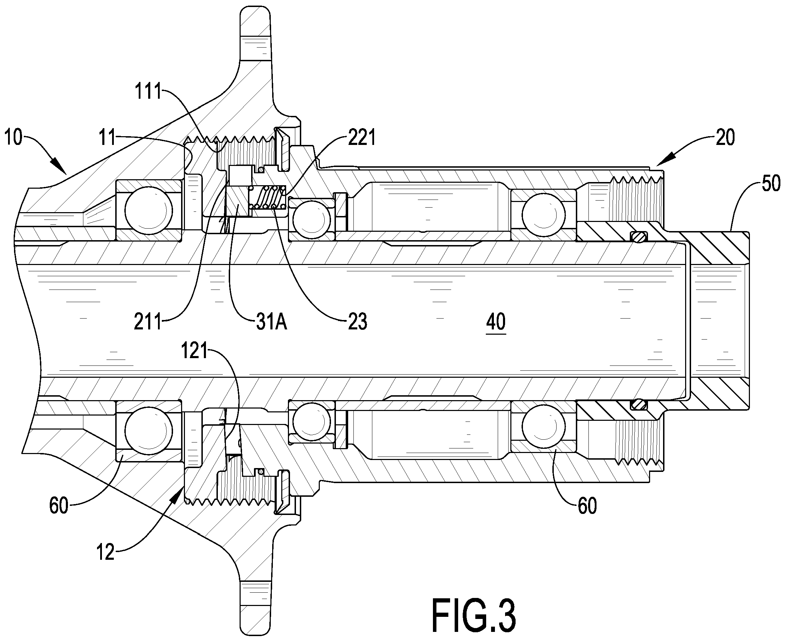

In the first embodiment of the present invention, the bicycle hub assembly comprises an axle 40 and an end cap 50. With reference to Figs. 2 and 3, the axle 40 extends from an end of the hub shell 10 through an interior of the hub shell 10 and protrudes from the other end of the hub shell 10 and further through the cassette body 20. The end cap 50 is mounted on an end of the axle 40 which protrudes from the cassette body 20 to mount the cassette body 20 and the hub shell 10. Multiple bearings 60 are disposed between the axle 40 and the cassette body 20 for supporting the hub shell 10 and the cassette body 20 rotating about the axle 40.

With reference to Figs. 2 and 3, the hub shell 10 comprises a receiving groove 11 on one of the two ends, and the axial teeth portion 121 is disposed therein. The cassette body 20 comprises a mounting portion 21 being circular, located on an end of the cassette body 20 away from the end cap 50 and configured to extend into the receiving groove 11 and be mounted with the hub shell 10. The mounting portion 21 has a front end surface 211 configured to extend into the receiving groove 11. With reference to Fig. 3, the front end surface 211 is located near the axial teeth portion 121.

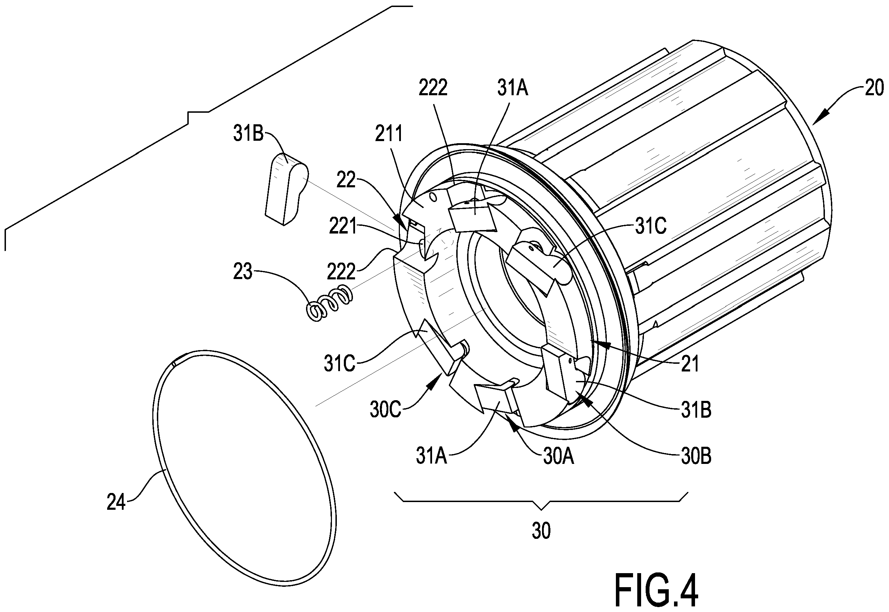

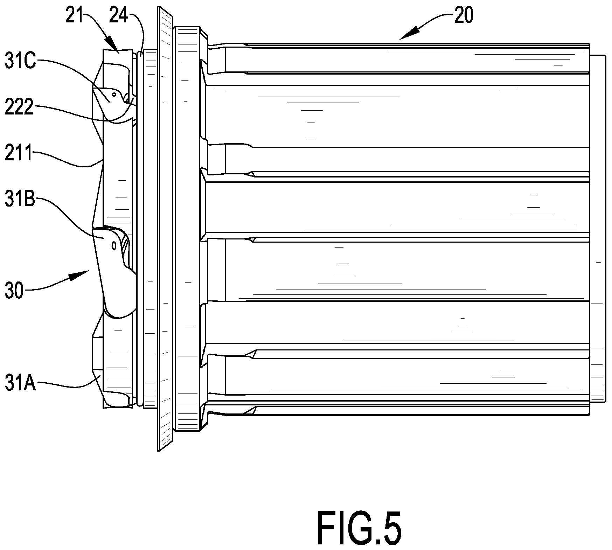

With reference to Figs. 4 to 6, in the first embodiment of the present invention, the bicycle hub assembly comprises three said pawl sets 30, which are respectively a first pawl set 30A, a second pawl set 30B, and a third pawl set 30C. With reference to Figs. 4 to 6, each one of the pawl sets 30A, 30B, 30C is composed of two pawls 31A, 31B, 31C. The two pawls 31A, 31B, 31C of each said pawl set 30A, 30B, 30C are mounted on the mounting portion 21 of the cassette body 20 at diametrically opposite positions. With reference to Fig. 5, each one of the pawls 31A, 31B, 31C of the three pawl sets 30A, 30B, 30C is capable of swinging in an axial direction of the bicycle hub assembly, protruding from the front end surface 211 of the mounting portion 21, and being unidirectionally engaged with the axial teeth portion 121 of the hub shell 10. Moreover, the two pawls 31A, 31B, 31C of each said pawl set 30A, 30B, 30C swing simultaneously.

When the cassette body 20 rotates relative to the hub shell 10, the two pawls 31A, 31B, 31C of the three pawl sets 30A, 30B, 30C are unidirectionally engaged with the axial teeth portion 121 by turns. That is, firstly, the two pawls 31A of the first pawl set 30A are engaged with two of the tooth blocks of the axial teeth portion 121, and at the same time the pawls 31B, 31C of the second and the third pawl sets 30B, 30C are not engaged with the tooth blocks of the axial teeth portion 121. As the cassette body 20 keeps rotating, the two pawls 31A of the first pawl set 30A will go off engagement and the two pawls 31B of the second pawl set 30B will be engaged with two of the tooth blocks of the axial teeth portion 121. For the time being, the pawls 31C of the third pawl set 30C will remain non-engaged with the tooth blocks of the axial teeth portion 121.

As the cassette body 20 keeps rotating, lastly, the two pawls 31C of the third pawl set 30C will be engaged with two of the tooth blocks of the axial teeth portion 121, and then the pawls 31A, 31B of the first and the second pawl sets 30A, 30B are all non-engaged. Afterwards, as the cassette body 20 keeps rotating, the next pawl set to be engaged with the axial teeth portion 121 will be the first pawl set 30A and so on.

With the above-mentioned technical features, the bicycle hub assembly with axial engagement of the present invention has the following advantages:
1. The multiple pawl sets 30A, 30B, 30C are engaged with the axial teeth portion 121 by turns, so voids among engagement of any one of the pawl sets 30A, 30B, 30C and the axial teeth portion 121 (equivalent to angular displacements of the cassette body 20 rotating relative to the hub shell 10 within twice said engagement) are lowered. Thereby the present invention effectively shortens voids of transmission and improves efficiency of transmission.
2. The two pawls 31A, 31B, 31C of each pawl set 30A, 30B, 30C are diametrically opposed on the mounting portion 21 of the cassette body 20, providing symmetric supports on two sides of an axis of the bicycle hub assembly when any one of the pawl sets 30A, 30B, 30C is engaged with the axial teeth portion 121, so tilting of the cassette body due to unbalanced partial supports by one of the pawl sets 30A, 30B, 30C may be prevented. Thereby the present invention further keeps good stability of transmission.

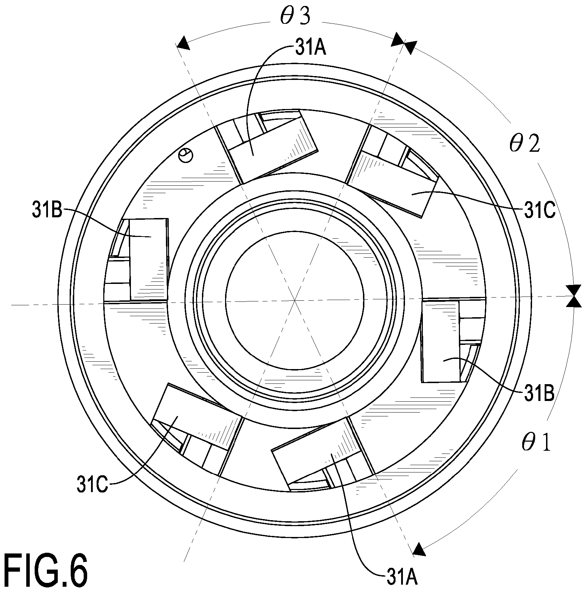

In other words, number of the tooth blocks of the axial teeth portion 121 determines an original void of transmission, and the original void can be equally divided into an actual void by the pawl sets 30A, 30B, 30C for maintaining balance of transmission. Afterwards, upon the actual void, positions of the pawls 31A, 31B, 31C on the mounting portion 21 are determined. In this way, with reference to Fig. 6, included angles θ1, θ2, θ3 between the pawl sets 30A, 30B, 30C may be unequal.

For instance, with reference to Fig. 2, in the first embodiment of the present invention, the axial teeth portion 121 comprises 20 tooth blocks arranged at equiangular displacements, i.e. said original void being 18 degrees (360°/20=18°). The cassette body of the conventional bicycle hub assembly needs to rotate 18 degrees for another engagement of the ratchet mechanism. In the first embodiment of the present invention, since there are the three pawl sets 30A, 30B, 30C for sharing the original void, said actual void may be shortened to 6 degrees (18°/3=6°), i.e. re-engagement can be achieved by the cassette body 20 rotating in 6 degrees, only one third of the original void. Next, positions of the pawls 31A, 31B, 31C on the mounting portion 21 can be determined according to the actual void. If the pawls 31A, 31B, 31C are arranged at equiangular displacements, which will be 60 degrees (360°/6=60°), there will be 3 tooth blocks between each adjacent two of the pawls 31A, 31B, 31C, and the fourth tooth block will be 12 degrees away (4*18°-60°=12°) . That is, the cassette body 20 will need to rotate another 12 degrees to make the corresponding pawl 31A, 31B, 31C engaged with the fourth tooth block.

Therefore, if the included angle θ1 between the pawl 31A of the first pawl set 30A and the pawl 31B of the second pawl set 30B and the included angle θ2 between the pawl 31B of the second pawl set 30B and the pawl 31C of the pawl set 30C are provided as 66 degrees, the requirement of the actual void of 6 degrees can be achieved. At this time, the included angle θ3 between the pawl 31C of the pawl set 30C and the pawl 31A of the first pawl set 30A is 48 degrees (180°-2*66°=48°), also complying with the requirement of the actual void of 6 degrees (3*18°-48°=6°). Therefore, the aforementioned advantages of the present invention are achievable.

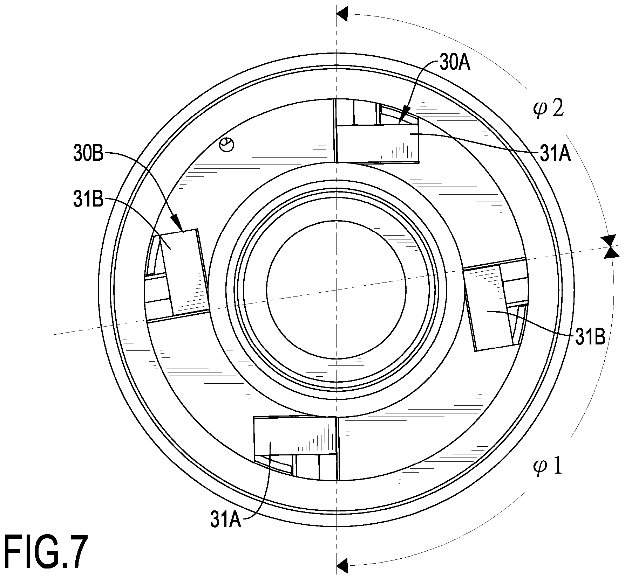

With reference to Fig. 7, a second embodiment of a bicycle hub assembly in accordance with the present invention differs from the first embodiment in that: The bicycle hub assembly only comprises two said pawl sets 30A, 30B, so said actual void is 9 degrees (18°/2=9°). That is, from one of the two pawl sets 30A, 30B being unidirectionally engaged with the axial teeth portion 121 to the other one of the two pawl sets 30A, 30B being unidirectionally engaged with the axial teeth portion 121, the cassette body 20 rotates relative to the hub shell 10 in 9 degrees, which is half the original void. From similar calculation, if the two included angles ϕ1, ϕ2 between the pawl 31A of the first pawl set 30A and the pawl 31B of the second pawl set 30B are provided as 99 degrees and 81 degrees, respectively, the requirement of the actual void of 9 degrees can be achieved (6*18°-99°=9°; 5*18°-81°=9°).

Therefore, a user may obtain shortened voids of transmission by adjusting number of the tooth blocks of the axial teeth portion 121 and number of the pawl sets 30A, 30B, 30C. For example, provided the axial teeth portion 121 has thirty tooth blocks arranged at equiangular displacements, and the bicycle hub assembly comprises three said pawl sets 30A, 30B, 30C, the original void is 12 degrees (360°/30=12°), and the actual void is 4 degrees (12°/3=4°), i.e. from one of the three pawl sets 30A, 30B, 30C being unidirectionally engaged with the axial teeth portion 121 to a next one of the three pawl sets 30A, 30B, 30C being unidirectionally engaged with the axial teeth portion 121, the cassette body 20 rotates relative to the hub shell 10 in 4 degrees. The included angles between the three pawl sets 30A, 30B, 30C are 68 degrees, 68 degrees, and 44 degrees, respectively.

Furthermore, with reference to Figs. 3 to 5, the cassette body 20 comprises multiple cavities 22 disposed on the mounting portion 21 at spaced intervals, so said pawl 31A, 31B, 31C is swingably received in a respective one of the multiple cavities 22. The positions of the cavities 22 are determined by the same method to determine the positions of the pawls 31A, 31B, 31C as described before. Each one of the cavities 22 has an elastomer 23 disposed therein. With reference to Fig. 5 the elastomer 23 is configured to be pressed by the corresponding pawl 31A, 31B, 31C and is resilient to push the corresponding pawl 31A, 31B, 31C to protrude from the front end surface 211. Specifically, said cavity 22 further has a recess 221 formed inside the cavity 22 by drilling and thereby being cylindrical. Said recess 221 is shielded by the corresponding pawl 31A, 31B, 31C. The elastomer 23 is a compression spring received in the recess 221 of the corresponding cavity 22. In other embodiments, the elastomer 23 may be an elastic clip that matches shapes of the cavity 22 and the corresponding pawl 31A, 31B, 31C.

While the cassette body 20 is rotating relative to the hub shell 10 and when the pawls 31A, 31B, 31C are off engagement, the pawls 31A, 31B, 31C are pressed by the tooth blocks of the axial teeth portion 121, thus swing inwardly into the corresponding cavities 22 and compress the elastomer 23. Until the pawls 31A, 31B, 31C become in engagement, where the pawls 31A, 31B, 31C are pushed by the resilient force from the elastomer 23 and protrude from the front end surface 211 once again, the pawls 31A, 31B, 31C thereby extend into and complete engagement with corresponding two of the tooth blocks of the axial teeth portion 121.

Moreover, the mounting portion 21 protrudes from an end of the cassette body 20, and each one of the multiple cavities 22 has an opening 222. The opening 222 is radially disposed on an outer periphery of the mounting portion 21 for the corresponding pawl 31A, 31B, 31C to enter the cavity 22 through the opening 222 for installation and replacement of the pawls 31A, 31B, 31C. The bicycle hub assembly comprises a fall-proof ring 24 detachably sheathed on the mounting portion 21 of the cassette body 20 and blocking the opening 222 of each one of the multiple cavities 22. Shielding of the fall-proof ring 24 may be partial shielding or full-cover shielding said opening 222, and either can prevent the pawls 31A, 31B, 31C from falling off from the openings 222 of the corresponding cavities 22.

Preferably, with reference to Fig. 2, in the first embodiment of the present invention, the hub shell 10 comprises a ratchet ring 12 and the axial teeth portion 121 is formed on the ratchet ring 12. The receiving groove 11 has an inner thread 111 which is configured to be screwed with the ratchet ring 12 so as to mount and receive the ratchet ring 12 in the receiving groove 11. Thereby, when the axial teeth portion 121 is worn out, it can be easily maintained and replaced.

Furthermore, in other embodiments, if each one of the multiple pawl sets only comprises one said pawl, the multiple pawl sets being engaged with the axial teeth portion by turns can still be achieved so as to improve the transmission efficiency and shorten the voids of transmission.

Each one of the multiple pawl sets can comprise more than three pawls as well, and the more than three pawls are mounted on the mounting portion of the cassette body at spaced intervals so as to provide the unidirectional engagement effect of the pawl set. In this way, not only improving the transmission efficiency and shortening the voids of transmission, balance of supports and stability of transmission can also be achieved. For example, each one of the multiple pawl sets comprises three pawls mounted on the mounting portions at equiangular displacement, i.e. included angles between adjacent pawls may be all 120 degrees, forming an equilateral triangle arrangement; 150 degrees, 150 degrees, 60 degrees, forming an isosceles triangle arrangement; or 100 degrees, 110 degrees, 150 degrees, forming an irregular triangle arrangement. Each of these arrangements can provide balanced supporting forces when the pawl sets are in engagement, preventing the cassette body from tilting. In addition, the at least two pawl sets may have different numbers of pawls. For example, the first pawl set has two pawls and the second pawl set has three pawls, etc.

Moreover, the bicycle hub assembly with axial engagement of the present invention has the effect of ease of processing and manufacturing: With aforementioned configurations, the user may process on the mounting portion of the cassette body, then install the multiple pawls onto the mounting portion, then further use the fall-proof means (e.g. the fall-proof ring) or other methods to shield the openings of the cavities of the mounting portion, and complete production of the bicycle hub assembly.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A bicycle hub assembly with axial engagement, and the bicycle hub assembly **characterized in** comprising:
a hub shell (10) comprising
a receiving groove (11); and
an axial teeth portion (121) disposed inside the receiving groove (11);
a cassette body (20) rotatably mounted with the hub shell (11) and comprising
a mounting portion (21) being circular and having a front end surface (211) configured to extend into the receiving groove (11); and
at least two pawl sets (30, 30A, 30B, 30C) and each one of the pawl sets (30, 30A, 30B, 30C) comprising
at least one pawl (31A, 31B, 31C) swingably mounted with the mounting portion (21) of the cassette body (20) and configured to protrude from the front end surface (211) of the mounting portion (21) and be unidirectionally engaged with the axial teeth portion (121) through axial swinging;
wherein when the cassette body (20) rotates relative to the hub shell (10), the at least two pawl sets (30, 30A, 30B, 30C) are unidirectionally engaged with the axial teeth portion (121) by turns.

2. The bicycle hub assembly with axial engagement as claimed in claim 1, wherein the hub shell (10) comprises
a ratchet ring (12) having the axial teeth portion (121) formed thereon; and
the receiving groove (11) having an inner thread (111) which is configured to be screwed with the ratchet ring (12) so as to receive the ratchet ring (12) in the receiving groove (11).

3. The bicycle hub assembly with axial engagement as claimed in claim 1, wherein
the cassette body (20) comprises
multiple cavities (22) disposed on the mounting portion (21) at spaced intervals, and each one of the cavities (22) having an elastomer (23) disposed therein;
each one of said pawls (31A, 31B, 31C) of the at least two pawl sets (30, 30A, 30B, 30C) is swingably received in a respective one of the multiple cavities (22); and
the elastomer (23) is configured to be pressed by the corresponding pawl (31A, 31B, 31C) and is resilient to push the corresponding pawl (31A, 31B, 31C) to protrude from the front end surface (211).

4. The bicycle hub assembly with axial engagement as claimed in claim 3, wherein
each one of the multiple cavities (22) has a recess (221) formed inside the cavity (22) and shielded by the corresponding pawl (31A, 31B, 31C); and
the elastomer (23) is a compression spring received in the recess (221) of the corresponding cavity (22).

5. The bicycle hub assembly with axial engagement as claimed in claim 3, wherein
the mounting portion (21) protrudes from an end of the cassette body (20);
each one of the multiple cavities (22) has an opening (222) radially disposed on an outer periphery of the mounting portion (21) for the corresponding pawl (31A, 31B, 31C) to enter the cavity (22) through the opening (222); and
the bicycle hub assembly comprises a fall-proof ring (24) sheathed on the mounting portion (21) of the cassette body (20) and blocking the opening (222) of each one of the multiple cavities (22).

6. The bicycle hub assembly with axial engagement as claimed in any one of claims 1 to 5, wherein
the axial teeth portion (121) has thirty tooth blocks arranged at equiangular displacements;
the bicycle hub assembly comprises
three said pawl sets (30A, 30B, 30C), each one of the three pawl sets (30A, 30B, 30C) composed of
two said pawls (31A, 31B, 31C) mounted on the mounting portion (21) at diametrically opposite positions; and
the cassette body (20) rotates relative to the hub shell (10) in 4 degrees from one of the three pawl sets (30A, 30B, 30C) being engaged with the axial teeth portion (121) to a next one of the three pawl sets (30A, 30B, 30C) being engaged with the axial teeth portion (121).

7. The bicycle hub assembly with axial engagement as claimed in any one of claims 1 to 5, wherein
the axial teeth portion (121) has twenty tooth blocks arranged at equiangular displacements;
the bicycle hub assembly comprises
three said pawl sets (30A, 30B, 30C), each one of the three pawl sets (30A, 30B, 30C) composed of
two said pawls (31A, 31B, 31C) mounted on the mounting portion (21) at diametrically opposite positions; and
the cassette body (20) rotates relative to the hub shell (10) in 6 degrees from one of the three pawl sets (30A, 30B, 30C) being engaged with the axial teeth portion (121) to a next one of the three pawl sets (30A, 30B, 30C) being engaged with the axial teeth portion (121).

8. The bicycle hub assembly with axial engagement as claimed in any one of claims 1 to 5, wherein
the axial teeth portion (121) has twenty tooth blocks arranged at equiangular displacements;
the bicycle hub assembly comprises
two said pawl sets (30A, 30B), each one of the two pawl sets (30A, 30B) composed of
two said pawls (31A, 31B) mounted on the mounting portion (21) at diametrically opposite positions; and
the cassette body (20) rotates relative to the hub shell (10) in 9 degrees from one of the two pawl sets (30A, 30B) being engaged with the axial teeth portion (121) to the other one of the two pawl sets (30A, 30B) being engaged with the axial teeth portion (121).

9. A bicycle hub assembly with axial engagement, and the bicycle hub assembly **characterized in** comprising:
a hub shell (10) comprising
a receiving groove (11); and
an axial teeth portion (121) disposed inside the receiving groove (11);
a cassette body (20) rotatably mounted with the hub shell (10) and comprising
a mounting portion (21) being circular and having a front end surface (211) configured to extend into the receiving groove (11); and
multiple pawls (31A, 31B, 31C) disposed on the mounting portion (21) of the cassette body (20) at spaced intervals, and said multiple pawls (31A, 31B, 31C) configured to protrude from the front end surface (211) of the mounting portion (21) and be unidirectionally engaged with the axial teeth portion (121) through axial swinging.

10. The bicycle hub assembly with axial engagement as claimed in claim 9, wherein the hub shell (10) comprises
a ratchet ring (12) having the axial teeth portion (121) formed thereon; and
the receiving groove (11) having an inner thread (111) which is configured to be screwed with the ratchet ring (12) so as to receive the ratchet ring (12) in the receiving groove (11).

11. The bicycle hub assembly with axial engagement as claimed in claim 10, wherein
the cassette body (20) comprises
multiple cavities (22) disposed on the mounting portion (21) at spaced intervals, and each one of the cavities (22) having an elastomer (23) disposed therein;
each one of said pawls (31A, 31B, 31C) is swingably received in a respective one of the multiple cavities (22); and
the elastomer (23) is configured to be pressed by the corresponding pawl (31A, 31B, 31C) and is resilient to push the corresponding pawl (31A, 31B, 31C) to protrude from the front end surface (211).

12. The bicycle hub assembly with axial engagement as claimed in claim 11, wherein
each one of the multiple cavities (22) has a recess (221) formed inside the cavity (22) and shielded by the corresponding pawl (31A, 31B, 31C); and
the elastomer (23) is a compression spring received in the recess (221) of the corresponding cavity (22).

13. The bicycle hub assembly with axial engagement as claimed in claim 11, wherein
the mounting portion (21) protrudes from an end of the cassette body (20);
each one of the multiple cavities (22) has an opening (222) radially disposed on an outer periphery of the mounting portion (21) for the corresponding pawl (31A, 31B, 31C) to enter the cavity (22) through the opening (222); and
the bicycle hub assembly comprises a fall-proof ring (24) sheathed on the mounting portion (21) of the cassette body (20) and blocking the opening (222) of each one of the multiple cavities (22).
